# EUROPÄISCHE PATENTSCHRIFT

(11) **EP 3 948 468 B1**
(45) Veröffentlichungstag und Bekanntmachung des Hinweises auf die Patenterteilung: **22.06.2022**
(21) Anmeldenummer: 21701281.4
(22) Anmeldetag: 19.01.2021
(51) Int. Cl.: G05D 1/00, G06F 11/36, G06F 9/455

(54) **STEUERGERÄT FÜR EIN FAHRZEUG UND VERFAHREN ZUM TESTEN EINES PROGRAMMELEMENTS EINER FAHRZEUGFUNKTION SOWIE KRAFTFAHRZEUG MIT EINEM STEUERGERÄT**
CONTROLLER FOR A VEHICLE, METHOD FOR TESTING A PROGRAM ELEMENT OF A VEHICLE FUNCTION, AND MOTOR VEHICLE COMPRISING A CONTROLLER
DISPOSITIF DE COMMANDE POUR UN VÉHICULE, PROCÉDÉ DE TEST D'UN ÉLÉMENT DE PROGRAMME D'UNE FONCTION DE VÉHICULE ET VÉHICULE AUTOMOBILE COMPRENANT UN DISPOSITIF DE COMMANDE

(30) Priorität: 15.04.2020 DE 102020110271
(43) Veröffentlichungstag der Anmeldung: 09.02.2022
(73) Patentinhaber: Audi AG, 85045 Ingolstadt (DE)
(72) Erfinder: HOFMOCKEL, Klaus, 85293 Reichertshausen (DE); SICKLINGER, Stefan, 85117 Eitensheim (DE)
(86) Internationale Anmeldenummer: PCT/EP2021/051076
(87) Internationale Veröffentlichungsnummer: WO 2021/209175

(56) Entgegenhaltungen:
- DE-A1- 10 319 365
- US-A1- 2018 196 732
- GOH OKEHEE ET AL: "Schedulable Online Testing Framework for Real-Time Embedded Applications in VM", 17. Dezember 2007 (2007-12-17), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 730 - 7, XP047307051, ISBN: 978-3-642-17318-9 Abbildungen 1,2; Tabelle 1
- REINHARDT DOMINIK ET AL: "An embedded hypervisor for safety-relevant automotive E/E-systems", PROCEEDINGS OF THE 9TH IEEE INTERNATIONAL SYMPOSIUM ON INDUSTRIAL EMBEDDED SYSTEMS (SIES 2014), IEEE, 18. Juni 2014 (2014-06-18), Seiten 189-198, XP032636744, DOI: 10.1109/SIES.2014.6871203 [gefunden am 2014-08-04]

## Beschreibung

Die Erfindung betrifft ein Steuergerät für ein Fahrzeug, ein Verfahren zum Testen eines Programmelements einer Fahrzeugfunktion sowie ein Kraftfahrzeug mit einem solchen Steuergerät.

Bei einem aktuellen digitalen Steuergerät müssen Softwareupdates oder Änderungen einen mehrstufigen Integrations-, Test-/Validierungs- und Genehmigungsprozess durchlaufen, bevor sie für ein Fahrzeug freigegeben werden. Bisher muss ein kompletter Softwarefreigabezyklus einschließlich einer Homologation durchlaufen werden, um neue Software im Fahrzeug mit allen damit verbundenen Risiken bereitzustellen.

Selbst im besten Fall dauert ein Freigabeprozess für eine Softwareänderung einschließlich Prüfung, Validierung, Homologation und Einsatz in einem Fahrzeug mindestens mehrere Wochen. Aufgrund dieser Tatsache ist ein schneller Test neuer Software, zum Beispiel im Hinblick auf einen Test eines neuen Wahrnehmungsalgorithmus für ein bestimmtes Szenario im autonomen Fahren, nur alle paar Wochen möglich, was einen möglichen Entwicklungsfortschritt stark verzögert und nicht dynamisch an anstehende Änderungsbedürfnisse, zum Beispiel bestimmte Einsatzorte oder Umweltbedingungen, anpassbar ist.

Eine bekannte Möglichkeit, einen schnellen Einsatz und das Anlernen von neuer Software in Fahrzeugen zu erreichen, ist ein Einbau eines redundanten Satzes von Hardwarekomponenten, das heißt von Steuergeräten, in das Fahrzeug, um die neue Software losgelöst von den aktiven Fahrzeugsicherheitssystemen beziehungsweise Fahrzeugfunktionen zu betreiben. Dieser Ansatz stellt jedoch zusätzliche Anforderungen an Kosten, Komplexität und einen Platzbedarf des Fahrzeugs dar.

Aus der DE 103 19 365 A1 ist ein Computersystem für ein Fahrzeug und ein Verfahren zum Kontrollieren des Datenverkehrs in einem solchen Computersystem bekannt. Das Computersystem weist innerhalb einer zentralen Recheneinheit eine abgegrenzte Laufzeitumgebung auf, in der Anwendungsprogramme ablaufen können, ohne Einfluss auf die Laufzeitumgebung außerhalb der abgegrenzten Laufzeitumgebung zu haben.

Aus der US 2018/0196732 A1 sind ein Verfahren und ein System zum Testen und Überprüfen einer Richtigkeit eines Computerprogramms während einer Laufzeit bekannt. Hierbei ist ein reflexiver Code einer reflexiven Funktion in ein Softwaremodul integriert, das das Computerprogramm ausführt. Wenn gewünscht, kann der reflexive Code durch eine Eingabe aktiviert werden und die dazugehörige Ausgabe wird verarbeitet.

Aus der WO 2019/133824 A1 sind Systeme und Verfahren zum sicheren und geschützten Aktualisieren von Software bekannt.

Die Aufgabe der vorliegenden Erfindung ist es, ein schnelles und sicheres Testen eines neuen Programmelements einer Fahrzeugfunktion bereitzustellen.

Diese Aufgabe wird durch die unabhängigen Patentansprüche gelöst. Vorteilhafte Weiterbildungen der Erfindung sind durch die abhängigen Patentansprüche, die folgende Beschreibung sowie die Figuren offenbart.

Durch die Erfindung ist ein Steuergerät für ein Fahrzeug mit einer Rechnervorrichtung bereitgestellt, die dazu ausgebildet ist, ein Steuerprogramm zum Steuern einer Fahrzeugfunktion und eine Testumgebung mit einem Steuertestprogramm zum Testen zumindest eines Programmelements einer Fahrzeugfunktion zu betreiben, wobei die Testumgebung innerhalb einer vom Steuerprogramm abgegrenzten Laufzeitumgebung definiert ist. Das Steuertestprogramm weist eine Programmschnittstelle auf, die dazu ausgebildet ist, das zumindest eine Programmelement in einer Laufzeit des Steuertestprogramms einzubinden und auszuführen. Das Steuertestprogramm ist ferner dazu ausgebildet, das zumindest eine Programmelement der Fahrzeugfunktion zu testen.

Mit anderen Worten weist das Steuergerät eine Rechnervorrichtung auf, auf der ein Steuerprogramm und ein Steuertestprogramm laufen. Die Rechnervorrichtung kann einen Prozessor, einen Arbeitsspeicher und einen Datenspeicher aufweisen. Insbesondere kann die Rechnervorrichtung dazu ausgebildet sein, Sensordaten von Fahrzeugfunktionen zu empfangen und zu verarbeiten. Fahrzeugfunktionen können beispielsweise von einem Fahrsicherheitssystem des Fahrzeugs stammen, wie beispielsweise von einem Laserradar, einem Fahrzeugradar und einer Fahrzeugkamera. Das Steuerprogramm kann dabei Daten von den Fahrzeugfunktionen verarbeiten und in Abhängigkeit des Ergebnisses der Verarbeitung Fahrzeugfunktionen ansteuern. Beispielsweise kann in einer Fahrzeugkamera durch das Steuerprogramm ein Objekt in einer Bewegungstrajektorie des Fahrzeugs erkannt werden, woraufhin das Steuerprogramm automatisch eine Bremsvorrichtung des Fahrzeugs zum Bremsen ansteuern kann.

Das Steuertestprogramm weist eine Programmschnittstelle auf, in der Programmelemente zur Laufzeit des Steuertestprogramms eingebunden und ausgeführt werden können. Das zumindest eine Programmelement kann eine Steuersoftware für zumindest eine Fahrzeugfunktion sein, durch die die Fahrzeugfunktion getestet werden kann. Beispielsweise kann das Programmelement ein neuer Algorithmus zur Objekterkennung einer Fahrzeugkamera sein, der mittels des Steuertestprogramms getestet werden soll. Insbesondere sind die Programmschnittstelle und das zumindest eine Programmelement dazu ausgebildet, das Programmelement in der Laufzeit des Steuertestprogramms zu integrieren. Das heißt, dass das Programmelement ausgetauscht werden kann, während das Steuergerät und das Steuertestprogramm im Betrieb sind, ein sogenannter "Hot Swap". Hierzu kann ein Plugin-Mechanismus vorgesehen sein, der es erlaubt, das Programmelement, das außerhalb der Rechnervorrichtung kompiliert sein kann, schnell einzubinden. Hierzu kann sich das Programmelement über die Programmschnittstelle selbstständig registrieren, wobei das Programmelement von dem Steuertestprogramm auf seine Integrität überprüft und dann instanziiert werden kann. Für das Programmelement können beispielsweise geteilte Bibliotheken ("shared libraries") verwendet werden, die dynamisch während der Laufzeit geladen werden können. Das Programmelement sowie das Steuertestprogramm können beispielsweise auf einer gängigen Programmiersprache wie z.B. Java, C, C#, C++, Rust, Go, und Python basieren.

Erfindungsgemäß ist die Testumgebung innerhalb einer vom Steuerprogramm abgegrenzten Laufzeitumgebung definiert. Das heißt, dass die Testumgebung in einer vom Steuerprogramm unabhängigen Testumgebung betrieben wird, sodass sich diese gegenseitig nicht beeinflussen. Dies kann beispielsweise dadurch erreicht werden, dass die Testumgebung auf einem anderen Prozessor betrieben wird oder besonders bevorzugt innerhalb einer virtuellen Maschine oder virtuellem Rechner, wodurch das Steuertestprogramm keinen Einfluss auf das Steuerprogramm ausüben kann. Insbesondere kann durch die Abgrenzung der Testumgebung auch Hardware für die Testumgebung verwendet werden, die nicht für Automotiveanwendungen zertifiziert ist, wodurch zusätzliche Kosten eingespart werden können.

Durch die Erfindung ergibt sich der Vorteil, dass neue Programmelemente zum Testen von Fahrzeugfunktionen schnell, das heißt nahezu in Echtzeit, in das Steuertestprogramm eingebunden werden können, ohne das Steuerprogramm zum Steuern der Fahrzeugfunktionen zu beeinträchtigen. Eine Sicherheit des Steuergeräts kann somit jederzeit während des Tests aufrechterhalten werden, ohne ein redundantes Steuergerät für das Fahrzeug bereitstellen zu müssen. Es wird eine Softwareprototypisierungsumgebung für eine Mehrzahl von möglichen Fahrzeugfunktionen, zum Beispiel einer Umfeldwahrnehmung, eines Kartenlernalgorithmus, einer Infotainmentfunktion und Steuerfunktionen des Fahrzeugs schnell bereitgestellt.

Im Vergleich mit dem Konzept der redundanten Bereitstellung eines Steuergeräts benötigt dieses Steuergerät bloß einen Bruchteil einer Datenmenge und von zusätzlichen Systemressourcen. Des Weiteren kann die Entwicklungszeit, die sogenannte "Big Loop", und eine Rückmeldungszeit für einen Entwickler, das heißt die Zeit von der Idee bis zu einer Rückmeldung von der umgesetzten Idee im Fahrzeug, stark reduziert werden, da der Entwickler nahezu in Echtzeit die Rückmeldung aus dem Fahrzeug erhalten kann, ob die in dem Programmelement umgesetzte Idee funktioniert. Außerdem kann somit erreicht werden, dass nicht mehr große Datenmengen von Rohdaten zur Auswertung überprüft werden müssen, sondern das Programmelement kann nur die benötigten Daten der Fahrzeugfunktionen verarbeiten, was eine Datenmenge auf die essentiellen Informationen beschränkt und somit eine Effizienz steigert.

Zu der Erfindung gehören auch Ausführungsformen, durch die sich zusätzliche Vorteile ergeben.

Eine Ausführungsform sieht vor, dass das Steuertestprogramm nur einen Lesezugriff auf die Fahrzeugfunktion aufweist. Mit anderen Worten kann das Steuertestprogramm die Fahrzeugfunktion nicht zum Ausführen einer Funktion ansteuern, sondern nur Daten der Fahrzeugfunktion lesen und verarbeiten. Durch diese Ausführungsform ergibt sich der Vorteil, dass das Steuertestprogramm keine Fahrzeugfunktion verändern oder auslösen kann und bei einem möglicherweise fehlerhaften Programmelement keine falschen Steuerbefehle ausgeführt werden. Somit kann eine Sicherheit des Steuergeräts verbessert werden.

Eine weitere Ausführungsform sieht vor, dass die Testumgebung mittels der abgegrenzten Laufzeitumgebung virtuell innerhalb der Rechnervorrichtung erzeugt ist, wobei die abgegrenzte Laufzeitumgebung keinen Einfluss auf eine Laufzeitumgebung des Steuerprogramms hat. Mit anderen Worten ist für die Testumgebung keine separate Hardware vorgesehen. Die Testumgebung läuft zusammen mit dem Steuerprogramm auf der Rechnervorrichtung, wobei die Testumgebung in einer anderen abgegrenzten Laufzeitumgebung mittels Software virtuell erzeugt ist. Die abgegrenzte Laufzeitumgebung kann als isolierter, virtueller Container angesehen werden, deren Code nur innerhalb der Testumgebung ausgeführt wird und keinen Einfluss auf das Steuerprogramm hat. Dies wird auch als Sandbox bezeichnet. Hierbei erhält die Sandbox beziehungsweise Testumgebung Ressourcen der Rechnervorrichtung zugeteilt, ohne jedoch einen Einfluss auf die Rechnervorrichtung und deren Betriebssystem oder das Steuerprogramm zu haben. Durch diese Ausführungsform ergibt sich der Vorteil, dass eine Testumgebung zum Testen des Programmelements erzeugt werden kann, ohne ein redundantes Steuergerät zu benötigen. Des Weiteren kann die Sicherheit erhöht werden, da die abgegrenzte Laufzeitumgebung die Laufzeitumgebung des Steuerprogramms nicht beeinflusst.

In einer weiteren Ausführungsform ist vorgesehen, dass das Steuertestprogramm einen Ereignisdetektor aufweist, der dazu ausgebildet ist, eine vorgegebene Testbedingung aus Daten der Fahrzeugfunktionen zu erkennen und das Programmelement des Steuertestprogramms bei Erkennen der vorgegebenen Testbedingung zu starten. Mit anderen Worten kann der Ereignisdetektor aus Daten aller Fahrzeugfunktionen eine vorgegebene Testbedingung erkennen und daraufhin das Programmelement der Fahrzeugfunktion zum Testen ausführen. Beispielsweise kann vorgesehen sein, dass das Programmelement nur ausgeführt wird, wenn eine bestimmte Situation eintritt, also die vorgegebene Testbedingung. Der Ereignisdetektor kann dabei die Daten aller Fahrzeugfunktionen, das heißt nicht nur der zu testenden, überprüfen. Besonders bevorzugt kann der Ereignisdetektor, der auch als Scheduler bezeichnet werden kann, aus mehreren Programmelementen dasjenige aussuchen, das zu der vorgegebenen Testbedingung passt. Beispielsweise kann die vorgegebene Testbedingung umfassen, dass ein Regensensor des Fahrzeugs Nässe erkennt, woraufhin der Ereignisdetektor ein Programmelement zum Testen einer Fahrzeugkamera bei Nässe ausführen kann. Vorzugsweise können auch mehrere Programmelemente parallel ausgeführt werden. Durch diese Ausführungsform ergibt sich der Vorteil, dass Testdaten nur erzeugt werden, wenn die vorgegebene Testbedingung eintritt.

Hiermit können eine Datenmenge und damit ein Speicherplatzbedarf reduziert werden.

Eine weitere Ausführungsform sieht vor, dass die Rechnervorrichtung eine für die Testumgebung dedizierte Recheneinheit aufweist. Mit anderen Worten kann die Rechnervorrichtung mit designierter Hardware für die Testumgebung ausgestattet sein. Diese Rechenressourcen sind exklusiv für das Steuertestprogramm und das zumindest eine Programmelement reserviert, die innerhalb der abgegrenzten Laufzeitumgebung getestet werden sollen. Beispielsweise kann die dedizierte Recheneinheit einen oder mehrere Prozessoren, einen Arbeitsspeicher und einen nicht flüchtigen Datenspeicher aufweisen. Vorzugsweise können diese als eingebettete Recheneinheit innerhalb der Rechnervorrichtung vorgesehen sein. Jedoch ist die dedizierte Recheneinheit nicht als ein dupliziertes Steuergerät zum Testen ausgelegt, das heißt, dass Steuergeräte der Fahrzeugfunktionen und Datenverbindungen, wie Ethernet, CAN, Flexray und so weiter, nicht dupliziert werden müssen. Die dedizierte Recheneinheit ist ausschließlich als eine Verarbeitungseinheit gedacht, die einen Algorithmus innerhalb der abgegrenzten Laufzeitumgebung ausführen kann und Testdaten daraus abspeichern kann. Durch diese Ausführungsform ergibt sich der Vorteil, dass Hardwareressourcen für die abgegrenzte Laufzeitumgebung klein gehalten werden können und eine Hardware und damit Rechenleistung für das Steuerprogramm nicht beeinflusst wird. Somit kann mit minimalem Materialeinsatz eine leistungsstarke und effiziente Testumgebung erzeugt werden.

Die beanspruchte Erfindung sieht vor, dass das Steuergerät eine Kommunikationseinrichtung aufweist, die dazu ausgebildet ist, eine drahtlose Kommunikationsverbindung zu der Testumgebung bereitzustellen. Mit anderen Worten ist eine Kommunikationseinrichtung bereitgestellt, mittels der über eine drahtlose Kommunikationsverbindung auf die Testumgebung zugegriffen werden kann. Die Kommunikationseinrichtung kann beispielsweise ein Mobilfunkmodul oder ein WLAN-Modul umfassen, die einen drahtlosen Datenaustausch ermöglichen. Durch diese Ausführungsform ergibt sich der Vorteil, dass auf die Testumgebung von außerhalb zugegriffen werden kann, ohne eine drahtgebundene Verbindung herstellen zu müssen. Hierdurch kann schneller und dynamischer von überall auf die Testumgebung zugegriffen werden, was eine Geschwindigkeit des Testprozesses erhöht.

Vorzugsweise ist vorgesehen, dass durch das Steuertestprogramm ermittelte Testdaten in der Testumgebung speicherbar sind, und wobei die Testumgebung dazu ausgebildet ist, die Testdaten der Kommunikationseinrichtung zum Übertragen an eine fahrzeugexterne Auswerteeinrichtung bereitzustellen. Mit anderen Worten kann die Testumgebung einen Datenspeicher umfassen, der ermittelte Testdaten des Steuertestprogramms speichert. Diese Testdaten können dann der Kommunikationseinrichtung bereitgestellt werden, die dazu ausgebildet ist, die Testdaten zu senden. Vorzugsweise können die Testdaten an eine fahrzeugexterne Auswerteeinrichtung gesendet werden, beispielsweise an einen Entwickler des Steuergeräts oder des zumindest einen Programmelements, der dann eine weitere Auswertung oder Bewertung der Testdaten durchführen kann. Durch diese Ausführungsform ergibt sich der Vorteil, dass benötigte Testdaten automatisch aus der Testumgebung versendet werden können, sobald diese aufgenommen wurden. Hierdurch kann eine Geschwindigkeit in einem Evaluierungsprozess des Programmelements beschleunigt werden.

Gemäß der beanspruchten Erfindung ist vorgesehen, dass das Steuertestprogramm dazu ausgebildet ist, einen vorgegebenen Fahrzeugstatus aus Daten der Fahrzeugfunktionen zu erkennen und zumindest ein vorgegebenes Programmelement über die drahtlose Kommunikationsverbindung zu beziehen, das den vorgegebenen Fahrzeugstatus zugeordnet ist. Mit anderen Worten kann das Steuertestprogramm zumindest ein vorgegebenes Programmelement anfordern, das zu einem vorgegebenen Fahrzeugstatus passt. Der vorgegebene Fahrzeugstatus kann beispielsweise aus Daten der Fahrzeugfunktionen durch das Steuertestprogramm erkannt werden. Der vorgegebene Fahrzeugstatus kann ein Fahrzeugzustand, ein Fahrzeugmodell, ein Standort des Fahrzeugs, eine Geschwindigkeit, eine Version des Steuerprogramms und weitere Variationen des Fahrzeugstatus umfassen. Das vorgegebene Programmelement kann dann je nach erkanntem vorgegebenem Fahrzeugstatus heruntergeladen werden. So kann zum Beispiel ein vorgegebener Fahrzeugstatus sein, dass sich das Fahrzeug in einer Region mit niedrigen Temperaturen bewegt. Daraufhin kann als vorgegebenes Programmelement ein Programm zum Testen eines elektronischen Stabilitätsprogramms in das Steuertestprogramm mittels der Programmschnittstelle eingebunden werden, um eine Verhaltensweise dieses vorgegebenen Programmelements bei niedrigen Temperaturen zu überprüfen. Durch diese Ausführungsform ergibt sich der Vorteil, dass die zu testenden Programmelemente variabel nur dann bereitgestellt werden, wenn die Testumgebung, das heißt der Fahrzeugstatus, auch den Testbedingungen entspricht. Somit können unnötige Testdaten vermieden werden, wodurch eine schnellere und genauere Überprüfung vorgenommen werden kann.

Erfindungsgemäß ist auch ein Verfahren zum Testen eines Programmelements einer Fahrzeugfunktion bereitgestellt, wobei ein Steuerprogramm zum Steuern von Fahrzeugfunktionen und eine Testumgebung mit einem Steuertestprogramm zum Testen des zumindest einen Programmelements der Fahrzeugfunktion bereitgestellt ist, wobei die Testumgebung innerhalb einer vom Steuerprogramm abgegrenzten Laufzeitumgebung betrieben wird, wobei durch eine Programmschnittstelle des Steuertestprogramms zumindest ein Programmelement in eine Laufzeit des Steuertestprogramms eingebunden und ausgeführt wird, und wobei durch das zumindest eine Programmelement die Fahrzeugfunktion getestet wird. Vorzugsweise kann die Testumgebung in einer Rechnervorrichtung im Fahrzeug bereitgestellt sein, insbesondere in der Rechnervorrichtung in der das Steuerprogramm zum Steuern von Fahrzeugfunktionen bereitgestellt ist. Alternativ oder zusätzlich können auch Sensordaten und/oder Aktordaten in eine fahrzeugexterne Auswerteeinrichtung gesendet werden, wobei die fahrzeugexterne Auswerteeinrichtung die Testumgebung aufweisen kann und der Test der Fahrzeugfunktion durch das Programmelement somit fahrzeugextern stattfinden kann. Hierbei ergeben sich gleiche Vorteile und Variationsmöglichkeiten wie bei dem Steuergerät.

Ein weiterer Aspekt der Erfindung betrifft ein Kraftfahrzeug mit einem Steuergerät gemäß einem der vorangegangenen Ausführungsbeispiele.

Zu der Erfindung gehört auch die Steuervorrichtung für das Kraftfahrzeug. Die Steuervorrichtung weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Steuergeräts beschrieben worden sind. Aus diesem Grund sind die entsprechenden Weiterbildungen des erfindungsgemäßen Verfahrens hier nicht noch einmal beschrieben.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: ein Kraftfahrzeug mit einem Steuergerät gemäß einer beispielhaften Ausführungsform;
- Fig. 2: ein schematisches Verfahrensdiagramm gemäß einer beispielhaften Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

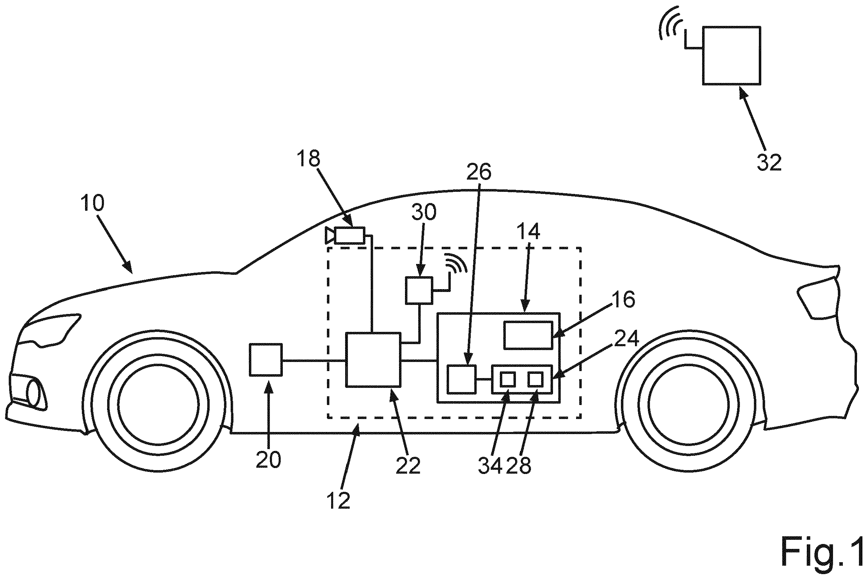

In Fig. 1 ist ein Kraftfahrzeug 10 mit einem schematischen Steuergerät 12 gemäß einer beispielhaften Ausführungsform dargestellt. Das Steuergerät 12 weist eine Rechnervorrichtung 14 auf, wobei die Rechnervorrichtung 14 ein Steuerprogramm 16 zum Steuern von zumindest einer Fahrzeugfunktion aufweisen kann.

Eine Fahrzeugfunktion kann beispielsweise eine Funktion einer Fahrzeugkamera 18 oder eines Sensors 20 sein, der beispielsweise ein Helligkeitssensor oder ein Regensensor sein kann. In einem Betrieb des Kraftfahrzeugs 10 kann beispielsweise der Sensor 20 und die Fahrzeugkamera 18 Daten an ein zentrales Gateway 22 des Steuergeräts 12 senden. Das zentrale Gateway kann beispielsweise einen Zugriff auf unterschiedliche Verbindungstechnologien, wie zum Beispiel Ethernet, CAN und/oder Flexray, herstellen. Die Daten der Fahrzeugfunktionen 18, 20 können dann der Rechnervorrichtung 14, insbesondere dem Steuerprogramm 16, bereitgestellt werden. Das Steuerprogramm 16 kann dann die Daten der Fahrzeugfunktionen 18, 20 verarbeiten und gegebenenfalls die Fahrzeugfunktionen 18, 20 mit neuen Steuerbefehlen ansteuern.

Eine Aktualisierung des Steuerprogramms oder ein Testen eines neuen Steuerprogramms ist jedoch nicht ohne weiteres möglich und mit einem hohen Aufwand verbunden. Beispielsweise müsste eine neue Software getestet und validiert werden, bevor sie auf die Rechnervorrichtung 14 eingespielt werden könnte, um das Steuerprogramm 16 zu ersetzen.

Um diesen Testprozess zu beschleunigen, kann in der Rechnervorrichtung 14 zusätzlich eine Testumgebung mit einem Steuertestprogramm 24 vorgesehen sein. Das Steuertestprogramm 24 kann bevorzugt in einer vom Steuerprogramm 16 abgegrenzten Laufzeitumgebung definiert sein. Besonders bevorzugt kann die Testumgebung mittels der abgegrenzten Laufzeitumgebung virtuell innerhalb der Rechnervorrichtung 14 bereitgestellt sein, wobei die abgegrenzte Laufzeitumgebung des Steuertestprogramms 24 keinen Einfluss auf eine Laufzeitumgebung des Steuerprogramms 16 hat und insbesondere nur einen Lesezugriff auf die Fahrzeugfunktionen 18, 20, das heißt auf die Daten der Fahrzeugfunktionen 18, 20, aufweist. Mit anderen Worten kann die Testumgebung eine sogenannte Sandbox sein, in der neue Software sicher getestet werden kann, ohne einen Ablauf des Steuerprogramms 16 zu beeinflussen. Somit kann innerhalb der abgegrenzten Laufzeitumgebung neue Software getestet und validiert werden, bevor das Steuerprogramm 16 mit dieser aktualisiert wird.

Für die Testumgebung kann die Rechnervorrichtung 14 eine dedizierte Recheneinheit 26 aufweisen, die beispielsweise einen Prozessor umfassen kann, um dem Steuertestprogramm 24 zusätzliche Rechenleistung bereitstellen zu können. Somit kann beispielsweise eine Rechenleistung des Steuerprogramms 16 durch eine Aufteilung von Rechenressourcen der Rechnervorrichtung 14 nicht beeinflusst sein.

Besonders bevorzugt kann das Steuertestprogramm 24 eine Programmschnittstelle aufweisen, die dazu ausgebildet ist, zumindest ein Programmelement 28 während einer Laufzeit des Steuertestprogramms 24 einzubinden und auszuführen. Das heißt, dass die Programmschnittstelle ein eingebettetes Plug-in-System für die Testumgebung bereitstellt, mittels der das Programmelement 28 in das Steuertestprogramm 24 eingebunden werden kann. Hierzu kann die Testumgebung einen Pufferspeicher (Cache) bereitstellen und das Programmelement kann eine Implementierung der zu testenden Software der Fahrzeugfunktion umfassen. Das Programmelement kann außerhalb der Rechnervorrichtung 14 kompiliert sein und während einer Laufzeit über die Programmschnittstelle eingebunden werden.

An der Programmschnittstelle kann das Programmelement, das heißt das Plug-in-Objekt, auf seine Integrität überprüft werden und anschließend initiiert werden. Auch kann vorgesehen sein, dass mehrere Programmelemente parallel laufen. Die Programmelemente sind üblicherweise sehr kleine Binärdateien, die Programme für die verschiedenen Fahrzeugfunktionen aufweisen können.

Um das Programmelement 28 in das Steuertestprogramm 24 einzubinden, kann beispielsweise das Steuergerät 12 eine Kommunikationseinrichtung 30 aufweisen, die dazu ausgebildet, ist, eine drahtlose Kommunikationsverbindung herzustellen. Insbesondere kann die Kommunikationseinrichtung 30 eine Verbindung zu einer fahrzeugexternen Auswerteeinrichtung 32 herstellen, die beispielsweise ein Server beziehungsweise ein Cloudsystem sein kann. Hierüber kann das Programmelement 28 an die Kommunikationseinrichtung 30 gesendet werden, wobei das Programmelement 28 über das zentrale Gateway 22 an die Rechnervorrichtung 14 weitergeleitet werden kann, wo es dann an die Programmschnittstelle des Steuertestprogramms 24 während einer Laufzeit des Steuertestprogramms 24 eingebunden werden kann.

Somit kann das zu testende Programmelement 28 schnell eingebunden werden, wodurch ein Testprozess beschleunigt werden kann. Das so eingebundene Programmelement 28 kann nahezu in Echtzeit über die drahtlose Kommunikationsverbindung bereitgestellt werden und das Steuertestprogramm 24 kann mittels des Programmelements 28 mit minimaler Verzögerung auf spezifische Anforderungen angepasst werden. Das Programmelement 28 kann beispielsweise eine Vielzahl von verschiedenen Daten, Algorithmen, Werten, Konfigurationen oder Einstellungen aufweisen, die verwendet werden können, um verschiedene Aufgaben des Steuergeräts 12 zu testen, wie zum Beispiel eine Konfiguration des Steuergeräts, ein Setzen von Triggern und/oder ein Sammeln von Daten.

Die so ermittelten Testdaten können in der Testumgebung in einem nicht flüchtigen Speicher zwischengespeichert werden und beispielsweise automatisch über die Kommunikationseinrichtung 30 an die fahrzeugexterne Auswerteeinrichtung 32 gesendet werden, nachdem das Programmelement 28 ausgeführt wurde. Alternativ können Testdaten auch ohne Zwischenspeicherung in Echtzeit an die fahrzeugexterne Auswerteeinrichtung 32 gesendet werden.

Besonders bevorzugt kann das Steuertestprogramm 24 einen Ereignisdetektor 34 aufweisen. Der Ereignisdetektor oder auch Scheduler kann Daten der Fahrzeugfunktionen 18, 20 beispielsweise auf eine vorgegebene Testbedingung hin überprüfen. Tritt diese vorgegebene Testbedingung ein, kann der Ereignisdetektor 34 das Steuertestprogramm 24 dazu ansteuern, das Programmelement 28 auszuführen. Der Ereignisdetektor kann beispielsweise ein Programm sein, das die Daten der Fahrzeugfunktionen 18, 20 einliest und mit der vorgegebenen Testbedingung, die beispielsweise einen Schwellenwert umfassen kann, vergleicht. Über- oder unterschreitet einer der Werte der Daten der Fahrzeugfunktionen den Schwellenwert der vorgegebenen Testbedingung, kann das Programmelement 28 gestartet werden.

Beispielsweise kann der Sensor 20 in einem Ausführungsbeispiel ein Helligkeitssensor sein. Die vorgegebene Testbedingung kann beispielsweise sein, dass ein Signal des Helligkeitssensors 20 unter einen vorbestimmten Helligkeitswert fällt und beispielsweise Dunkelheit anzeigt. Ist dies der Fall, kann der Ereignisdetektor 34 das Programmelement 28 starten, das zum Beispiel ein Programm für eine Objekterkennung aus Kameradaten der Fahrzeugkamera 18 ist, um zu überprüfen, wie gut der Algorithmus des Programmelements 28 Objekte in einer dunklen Umgebung erkennt. Die so ermittelten Testdaten können dann über die Kommunikationseinrichtung 30 an die fahrzeugexterne Auswerteeinrichtung 32 gesendet werden.

Vorzugsweise ist auch vorgesehen, dass aus den Daten der Fahrzeugfunktionen 18, 20 auch ein vorgegebener Fahrzeugstatus erkannt wird. Beispielsweise kann dies auch durch den Ereignisdetektor 34 durchgeführt werden. Mit dem vorgegebenen Fahrzeugstatus ist ein fahrzeugspezifischer Zustand gemeint, wie beispielsweise eine Konfiguration von Fahrzeugfunktionen und/oder Hardware des Kraftfahrzeugs 10. Beispielsweise können bestimmte Fahrzeugfunktionen, wie Funktionen für autonomes Fahren, durch das Programmelement 28 getestet werden. In diesem Fall wäre jedoch ein Ausführen des Programmelements 28 bei nicht autonom betriebenen Fahrzeugen unnötig und würde zu unbrauchbaren Testdaten führen. Um das zu vermeiden, kann bei dem Erkennen des vorgegebenen Fahrzeugstatus ein vorgegebenes Programmelement, das getestet werden soll, von dem Steuertestprogramm 24 automatisch heruntergeladen werden, beispielsweise von der fahrzeugexternen Auswerteeinrichtung 32, wobei das vorgegebene Programmelement dann beispielsweise von dem Ereignisdetektor 34 bei Eintreten der vorgegebenen Testbedingung ausgeführt werden kann.

Somit kann der Testprozess individualisiert und für spezifische Fahrzeuge in spezifischen Szenarien angepasst werden. Außerdem können große Mengen an Rohdaten vermieden werden, die an die fahrzeugexterne Auswerteeinrichtung 32 gesendet werden, da nur die benötigten Testdaten für die spezifischen Fahrzeuge durch das Programmelement 28 erhalten werden.

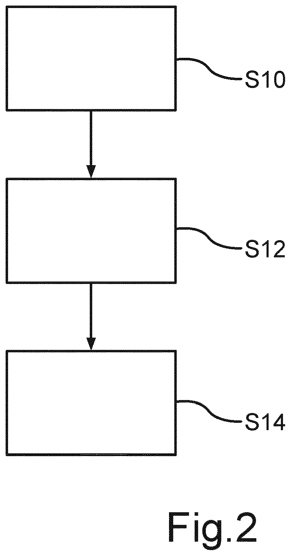

In Fig. 2 ist ein schematisches Verfahrensdiagramm zum Testen eines Programmelements einer Fahrzeugfunktion gemäß einer beispielhaften Ausführungsform dargestellt, wobei ein Steuerprogramm 16 zum Steuern von Fahrzeugfunktionen 18, 20 und einer Testumgebung mit einem Steuertestprogramm 24 zum Testen zumindest eines Programmelements 28 einer Fahrzeugfunktion bereitgestellt ist. In einem Schritt S10 wird die Testumgebung innerhalb einer vom Steuerprogramm 16 abgegrenzten Laufzeitumgebung betrieben. In einem Schritt S12 wird durch eine Programmschnittstelle des Steuertestprogramms 24 zumindest ein Programmelement 28 in einer Laufzeit des Steuertestprogramms 24 eingebunden und ausgeführt. In einem Schritt S14 wird durch das zumindest eine Programmelement 28 eine Fahrzeugfunktion, die durch das Programmelement 28 vorbestimmt sein kann, getestet. Die daraus erhaltenen Testdaten können dann zur weiteren Auswertung analysiert werden.

In einer anderen beispielhaften Ausführungsform besteht ein Aspekt darin, eine Sandbox (Testumgebung) innerhalb des jeweiligen elektronischen Fahrzeugsystems (Steuergerät 12, ECU) zu implementieren. Diese Sandbox kann Software- und Hardware-Elemente umfassen, die es ermöglichen, eine neue Software-Funktion (z.B. Algorithmus) mittels eines Programmelements 28 in einer abgegrenzten Laufzeitumgebung zu platzieren. Diese Sandbox verfügt über einen speziellen Plug-in-Mechanismus, der es ermöglicht, Softwarekomponenten (das Programmelement 28) während eines Betriebs des Systems aus der Ferne über Over-the-Air-Update-Mechanismen auszutauschen, was auch als "hot swap" bezeichnet wird. Das Sandbox-Konzept garantiert eine sichere Betriebsumgebung für neue Software, die unter keinen Umständen die Sicherheit des laufenden Systems beeinträchtigt und jederzeit vollständig getrennt ist. Die Sandbox hat nur lesenden Zugriff auf alle erforderlichen Fahrzeugsysteme und Daten.

Durch diese Trennung mittels der Sandbox kann das Herunterladen spezifischer, unbewiesener, ungetesteter oder anderweitig nicht freigegebener Softwareelemente (Programmelement 28), z.B. einer "Alpha-Version", unter Umgehung des etablierten Freigabeprozesses auf das Fahrzeug 10 übertragen werden. Die eingesetzten Softwareelemente können in nahezu Echtzeit durch den Over-the-Air-Zugriff modifiziert und mit minimaler Verzögerung an spezifische Bedürfnisse angepasst werden. Diese Softwareelemente können eine Vielzahl verschiedener Elemente, zum Beispiel Daten, Algorithmen, Werte, Konfigurationen und Einstellungen enthalten, die zur Erfüllung verschiedener Aufgaben im Fahrzeug verwendet werden können, wie zum Beispiel eine Konfiguration eines Systems, ein Einstellung von Auslösern und eine Datenerfassung.

Einer von vielen Anwendungsfälle für den Betrieb dieser Sandbox ist zum Beispiel das Testen eines neuen Algorithmus zur Erkennung eines bestimmten Objekts aus einem Videostrom. Der eingesetzte, zu testende Algorithmus (Programmelement 28) läuft in der Sandbox parallel zum bestehenden Algorithmus (Steuerprogramm 16), der insbesondere getestet, verifiziert, homologiert und freigegebenen ist, und hat Zugriff auf genau die gleichen Informationen aus dem jeweiligen elektronischen System; das heißt von den Sensoren 18, 20. Jedes neue Verhalten oder jede neue Information, die aus dem neuen Algorithmus erlernt oder gesammelt wird, kann in der Sandbox gespeichert und dann in ein Cloud-System (fahrzeugexterne Auswerteeinrichtung 32) des Herstellers nahezu in Echtzeit hochgeladen werden.

Diese hochgeladenen Informationen (Testdaten, Trainingsdaten und Messdaten) können dann sofort als Echtzeit-Feedback für weitere Tests und die Bewertung des Programmelements 28, an dem gearbeitet wird, verwendet werden. Diese ermöglicht eine schnelle Software-Prototyping-Umgebung in einer Vielzahl von möglichen Anwendungen, zum Beispiel Wahrnehmung, Map-Learning, Infotainment und Steuerungssysteme. Im Vergleich zu dem Konzept der Duplizierung des Systems, erfordert dieses Konzept nur einen Bruchteil zusätzlicher Systemressourcen. Die Einsatzzykluszeit, die auch als "Big Loop" bezeichnet wird, reduziert sich von mehreren Wochen auf Millisekunden.

Darüber hinaus kann der Einsatzprozess individualisiert und an bestimmte Fahrzeuge in bestimmten Szenarien, zum Beispiel an einen Standort, das Wetter, einen Fahrzeugzustand und/oder eine Fahrzeugkonfiguration angepasst werden. Dies steht im Gegensatz bisherigen Methoden, bei der große Mengen an Rohdaten gesammelt und zur weiteren Verarbeitung in einer Cloud gespeichert werden. Die gezeigte Methode ermöglicht eine Reduzierung der gesammelten Datenmenge auf das absolut Wesentliche der gewünschten Informationen und erlaubt eine hocheffiziente Nutzung der Kommunikationskanäle und der Cloudspeicherressourcen.

Insgesamt zeigen die Beispiele, wie eine automatisierte, bidirektionale und echtzeitnahe Testumgebung unter Verwendung einer Sandbox und eines eingebetteten Plugin-Systems bereitgestellt werden kann.

## Patentansprüche

1. Steuergerät (12) für ein Fahrzeug (10),
- mit einer Rechnervorrichtung (14), die dazu ausgebildet ist, ein Steuerprogramm (16) zum Steuern einer Fahrzeugfunktion und eine Testumgebung mit einem Steuertestprogramm (24) zum Testen zumindest eines Programmelements (28) einer Fahrzeugfunktion zu betreiben,
- wobei die Testumgebung innerhalb einer vom Steuerprogramm (16) abgegrenzten Laufzeitumgebung definiert ist;
- wobei das Steuertestprogramm (24) eine Programmschnittstelle aufweist, die dazu ausgebildet ist, das zumindest eine Programmelement (28) in einer Laufzeit des Steuertestprogramms (24) einzubinden und auszuführen; und
- wobei das Steuertestprogramm (24) dazu ausgebildet ist, das zumindest eine Programmelement (28) der Fahrzeugfunktion zu testen;
- wobei das Steuergerät (12) eine Kommunikationseinrichtung (30) aufweist, die dazu ausgebildet ist, eine drahtlose Kommunikationsverbindung zu der Testumgebung bereitzustellen;
- wobei das Steuertestprogramm (24) dazu ausgebildet ist, einen vorgegebenen Fahrzeugstatus aus Daten der Fahrzeugfunktionen zu erkennen und zumindest ein vorgegebenes Programmelement über die drahtlose Kommunikationsverbindung zu beziehen, das dem vorgegebenen Fahrzeugstatus zugeordnet ist.

2. Steuergerät (12) nach Anspruch 1, wobei das Steuertestprogramm (24) nur einen Lesezugriff auf die Fahrzeugfunktion aufweist.

3. Steuergerät (12) nach einem der vorhergehenden Ansprüche, wobei die Testumgebung mittels der abgegrenzten Laufzeitumgebung virtuell innerhalb der Rechnervorrichtung (14) erzeugt ist, wobei die abgegrenzte Laufzeitumgebung keinen Einfluss auf eine Laufzeitumgebung des Steuerprogramms (16) hat.

4. Steuergerät (12) nach einem der vorhergehenden Ansprüche, wobei das Steuertestprogramm (24) einen Ereignisdetektor (34) aufweist, der dazu ausgebildet ist, eine vorgegebene Testbedingung aus Daten der Fahrzeugfunktionen zu erkennen und das Programmelement (28) des Steuertestprogramms (24) bei Erkennen der vorgegebenen Testbedingung zu starten.

5. Steuergerät (12) nach einem der vorhergehenden Ansprüche, wobei die Rechnervorrichtung (14) eine für die Testumgebung dedizierte Recheneinheit (26) aufweist.

6. Steuergerät (12) nach einem der vorhergehenden Ansprüche, wobei durch das Steuertestprogramm (24) ermittelte Testdaten in der Testumgebung speicherbar sind, und wobei die Testumgebung dazu ausgebildet ist, die Testdaten der Kommunikationseinrichtung (30) zum Übertragen an eine fahrzeugexterne Auswerteeinrichtung (32) bereitzustellen.

7. Verfahren zum Testen eines Programmelements (28) einer Fahrzeugfunktion, wobei ein Steuerprogramm (16) zum Steuern von Fahrzeugfunktionen und eine Testumgebung mit einem Steuertestprogramm (24) zum Testen des Programmelements der Fahrzeugfunktion bereitgestellt wird, wobei die Testumgebung innerhalb einer vom Steuerprogramm abgegrenzten Laufzeitumgebung betrieben wird (S10), wobei durch eine Programmschnittstelle des Steuertestprogramms zumindest ein Programmelement in einer Laufzeit des Steuertestprogramms eingebunden und ausgeführt wird (S12), und wobei durch das zumindest eine Programmelement die Fahrzeugfunktion getestet wird (S14), wobei durch eine Kommunikationseinrichtung (30) des Steuergeräts (12) eine drahtlose Kommunikationsverbindung zu der Testumgebung bereitgestellt wird, und wobei das Steuertestprogramm (24) einen vorgegebenen Fahrzeugstatus aus Daten der Fahrzeugfunktionen erkennt und zumindest ein vorgegebenes Programmelement über die drahtlose Kommunikationsverbindung bezieht, das dem vorgegebenen Fahrzeugstatus zugeordnet ist.

8. Kraftfahrzeug (10) mit einem Steuergerät (12) nach einem der Ansprüche 1 bis 6.

## Claims

1. Control device (12) for a vehicle (10),
- having a computing device (14) which is designed to operate a control program (16) for controlling a vehicle function and a test environment with a control test program (24) for testing at least one program element (28) of a vehicle function,
- wherein the test environment is defined within a runtime environment delimited by the control program (16);
- wherein the control test program (24) has a program interface which is designed to integrate and run the at least one program element (28) in a runtime of the control test program (24); and
wherein the control test program (24) is designed to test the at least one program element (28) of the vehicle function;
- wherein the control device (12) has a communication apparatus (30) designed to provide a wireless communication link to the test environment;
- wherein the control test program (24) is designed to detect a predetermined vehicle status from data of the vehicle functions and to obtain, via the wireless communication link, at least one predetermined program element associated with the predetermined vehicle status.

2. Control device (12) according to claim 1, wherein the control test program (24) has read-only access to the vehicle function.

3. Control device (12) according to any one of the preceding claims, wherein the test environment is virtually generated within the computing device (14) by means of the delimited runtime environment, wherein the delimited runtime environment has no influence on a runtime environment of the control program (16).

4. Control device (12) according to any of the preceding claims, wherein the control test program (24) has an event detector (34) which is designed to detect a predetermined test condition from data of the vehicle functions and to start the program element (28) of the control test program (24) upon detection of the predetermined test condition.

5. Control device (12) according to any of the preceding claims, wherein the computing device (14) has a computing unit (26) dedicated to the test environment.

6. Control device (12) according to any of the preceding claims, wherein test data determined by the control test program (24) can be stored in the test environment, and wherein the test environment is designed to provide the test data to the communication apparatus (30) for transmission to an evaluation apparatus (32) external to the vehicle.

7. Method for testing a program element (28) of a vehicle function, wherein a control program (16) for controlling vehicle functions and a test environment with a control test program (24) for testing the program element of the vehicle function is provided, wherein the test environment is operated (S10) within a runtime environment delimited by the control program, wherein at least one program element is integrated and run (S12) by a program interface of the control test program in a runtime of the control test program, and wherein the vehicle function is tested (S14) by the at least one program element, wherein a wireless communication link to the test environment is provided by a communication apparatus (30) of the control device (12), and wherein the control test program (24) detects a predetermined vehicle status from data of the vehicle functions and obtains, via the wireless communication link, at least one predetermined program element associated with the predetermined vehicle status.

8. Motor vehicle (10) having a control device (12) according to any of claims 1 to 6.

## Revendications

1. Dispositif de commande (12) pour un véhicule (10),
- avec un dispositif informatique (14) qui est configuré pour exécuter un programme de commande (16) destiné à commander une fonction de véhicule et un environnement de test avec un programme de test de commande (24) destiné à tester au moins un élément de programme (28) d'une fonction de véhicule,
- dans lequel l'environnement de test est défini à l'intérieur d'un environnement d'exécution délimité par le programme de commande (16) ;
- dans lequel le programme de test de commande (24) présente une interface de programme qui est configurée pour intégrer et exécuter le au moins un élément de programme (28) pendant un temps d'exécution du programme de test de commande (24) ; et
dans lequel le programme de test de commande (24) est configuré de manière à tester au moins un élément de programme (28) de la fonction de véhicule ;
- dans lequel le dispositif de commande (12) présente un système de communication (30) qui est configuré pour fournir une liaison de communication sans fil à l'environnement de test ;
- dans lequel le programme de test de commande (24) est configuré pour détecter un état de véhicule prédéterminé à partir des données des fonctions du véhicule et obtenir au moins un élément de programme prédéterminé via la liaison de communication sans fil qui est associé à l'état de véhicule prédéterminé.

2. Dispositif de commande (12) selon la revendication 1, dans lequel le programme de test de commande (24) ne présente uniquement qu'un accès en lecture à la fonction de véhicule.

3. Dispositif de commande (12) selon l'une quelconque des revendications précédentes, dans lequel l'environnement de test est produit virtuellement au moyen de l'environnement d'exécution délimité au sein du dispositif informatique (14), dans lequel l'environnement d'exécution délimité n'exerce aucune influence sur un environnement d'exécution du programme de commande (16).

4. Dispositif de commande (12) selon l'une quelconque des revendications précédentes, dans lequel le programme de test de commande (24) présente un détecteur d'événement (34) qui est configuré pour détecter une condition de test prédéterminée à partir des données des fonctions de véhicule et lancer l'élément de programme (28) du programme de test de commande (24) en cas de détection de la condition de test prédéterminée.

5. Dispositif de commande (12) selon l'une quelconque des revendications précédentes, dans lequel le dispositif informatique (14) présente une unité de calcul (26) dédiée à l'environnement de test.

6. Dispositif de commande (12) selon l'une quelconque des revendications précédentes, dans lequel des données de test déterminées par le programme de test de commande (24) peuvent être enregistrées dans l'environnement de test, et dans lequel l'environnement de test est configuré pour fournir les données de test du système de communication (30) à des fins de transmission à un système d'évaluation (32) externe au véhicule.

7. Procédé de test d'un élément de programme (28) d'une fonction de véhicule, dans lequel un programme de commande (16) destiné à commander des fonctions de véhicule et un environnement de test avec un programme de test de commande (24) destiné à tester l'élément de programme de la fonction de véhicule est fourni, dans lequel l'environnement de test est exécuté (S10) à l'intérieur d'un environnement d'exécution délimité par le programme de commande, dans lequel au moins un élément de programme est intégré et exécuté (S12) par une interface de programme du programme de test de commande pendant un temps d'exécution du programme de test de commande, et dans lequel la fonction de véhicule est testée (S14) par le au moins un élément de programme, dans lequel une liaison de communication sans fil est fournie à l'environnement de test par un système de communication (30) du dispositif de commande (12), et dans lequel le programme de test de commande (24) détecte un état de véhicule prédéterminé à partir des données des fonctions de véhicule et obtient au moins un élément de programme prédéterminé via la liaison de communication sans fil qui est associé à l'état de véhicule spécifié.

8. Véhicule automobile (10) équipé d'un dispositif de commande (12) selon l'une quelconque des revendications 1 à 6.
